# EUROPEAN PATENT APPLICATION

(11) **EP 4 538 108 A1**
(43) Date of publication of application: **16.04.2025**
(21) Application number: 24205290.0
(22) Date of filing: 08.10.2024
(51) Int. Cl.: B60L 53/37, B60L 53/65

(54) **VEHICLE CHARGE ASSIST SYSTEM AND METHOD**

(30) Priority: 09.10.2023 US 202363588905 P
(71) Applicant: Transportation IP Holdings, LLC, Norwalk, CT 06851 (US)
(72) Inventor: Kobel, Karl J, Norwalk (US); Schmidt, Timothy R, Norwalk (US)
(74) Representative: Worthington, Richard Easton

(57) **Abstract**

Vehicle charge assist system and method include receiving image data generated by an optical sensor. The image data depicts at least a portion of a charging device and at least a portion of a vehicle approaching the charging device. The system and method analyze the image data that is received to detect the vehicle, and based on the image data that is analyzed, generate guidance instructions for communication to the vehicle. The guidance instructions are configured to at least one of assist with or control movement of the vehicle such that a vehicle contact interface mounted on the vehicle aligns with the charging device.

## Description

### CROSS-REFERENCE TO RELATED APPLICATION

This application claims priority to and the benefit of U.S. Provisional Application No. 63/588,905, filed October 9, 2023, entitled "VEHICLE CHARGE ASSIST SYSTEM AND METHOD," the entire disclosure of which is hereby incorporated by reference herein.

### BACKGROUND

### Technical Field.

The subject matter described herein relates to controlling vehicle charge operations between a vehicle and an off-board power source.

### Discussion of Art.

Some electric vehicles can be charged from wayside charging stations using pantographs, without requiring a plug connection (e.g., a conductive connection between contacts through which electric energy is transferred). Electric vehicles can refer to fully electric vehicles that do not combust fuel for propulsion and hybrid vehicles that include both a battery pack for powering propulsion as well as a fuel combustion engine. For example, electric buses and other transit vehicles may have a contact interface installed on the roof. When the vehicle pulls into a charging spot of a charging station, an overhead pantograph may lower into contact with the vehicle contact interface to establish an electrically conductive path between the vehicle and the charging station. The battery pack of the vehicle may receive electric current from the charging station via the pantograph as the vehicle is parked at the charging spot. Once a sufficient amount of electric current is received, the pantograph may be retracted to break the conductive path and disconnect the charging station from the vehicle. The vehicle may then move out of the charging spot to travel along a route.

This type of charging arrangement that requires a vehicle operator to maneuver the vehicle relative to the charging station has inherent difficulties. For example, it may be difficult for an operator of the vehicle to align the contact interface of the vehicle with the pantograph to establish a proper electrical connection. Due to the overhead positioning of the pantograph, an operator in the cab of the vehicle may not be able to see the pantograph as the vehicle pulls underneath the pantograph. As a result of the obstructed view, the operator may not be able to determine the position of the vehicle contact interface relative to the pantograph, and therefore may not be able to steer the vehicle to a properly aligned position. The vehicle contact interface could be misaligned relative to the pantograph in the longitudinal forward- and-back dimension and/or the lateral side-to-side dimension. Improper alignment may not only prevent current transfer between the charging station and the vehicle, but may also damage equipment and/or cause an electrical short circuit. Furthermore, if the vehicle is misaligned upon an initial approach to the charging station, it may be difficult to remedy the misalignment by steering the vehicle. For example, depending on applicable rules and regulations, a vehicle operator may not be permitted to back up the vehicle in the area of the charging station to attempt another approach.

Furthermore, some charging stations are depots that are designed to charge a fleet of vehicles. The charging station may include several pantographs arranged in at least one row. For example, a lane may include several charging spots or stalls that are disposed end-to- end like parallel parking spots, and each spot has a corresponding pantograph for charging a vehicle parked in that spot. Another difficulty experienced by vehicle operators is determining which pantograph (e.g., charging spot) to select among multiple pantographs in the charging station that appear available. A vehicle may approach one charging spot only to find out that the charging spot is unable to charge the vehicle battery pack due to the pantograph and/or other power components of the charging spot being out of service, incompatible with the vehicle, reserved for another vehicle, obstructed, and/or the like. Furthermore, a vehicle operator may unknowingly stop at a charging spot of the charging station that obstructs the ability of other vehicles to reach available charging spots, reducing the throughput and efficiency of the charging station. It may be desirable to have a system and method that is different from existing systems and methods.

### BRIEF DESCRIPTION

In accordance with one example or aspect, a system is provided that includes one or more processors configured to be communicatively connected to an optical sensor. The one or more processors are configured to receive image data generated by the optical sensor. The image data depicts at least a portion of a charging device and at least a portion of a vehicle approaching the charging device. The one or more processors are configured to analyze the image data that is received to detect the vehicle, and based on the image data that is analyzed, generate guidance instructions for communication to the vehicle. The guidance instructions are configured to at least one of assist with or control movement of the vehicle such that a vehicle contact interface mounted on the vehicle aligns with the charging device.

In accordance with one example or aspect, a system is provided that includes one or more processors configured to be communicatively connected to an optical sensor. The one or more processors are configured to receive image data generated by the optical sensor. The image data depicts at least a portion of a vehicle approaching a charging device. The one or more processors are configured to analyze the image data that is received to detect the vehicle, and generate a live video feed for communication to the vehicle. The live video feed depicts the image data generated by the optical sensor for display to an operator of the vehicle.

In accordance with one example or aspect, a system is provided that includes an optical sensor associated with a first charging device at a charging station. The first charging device corresponding to a first charging stall of multiple charging stalls at the charging station. The system includes one or more processors communicatively connected to the optical sensor. The one or more processors are configured to receive image data captured by the optical sensor. The image data depicts at least a portion of a vehicle approaching the first charging device. The one or more processors are configured to analyze the image data that is received to detect the vehicle, and determine a status of a second charging stall of the multiple charging stalls. The second charging stall is located adjacent the first charging stall. The one or more processors are configured to assign the vehicle to the first charging stall based on the status of the second charging stall, and generate a control signal to notify the vehicle to stop at the first charging stall for conductively coupling to the first charging device.

In accordance with one example or aspect, a system is provided that includes an optical sensor and one or more processors communicatively connected to the optical sensor. The optical sensor is associated with a charging device at a charging station, the optical sensor is positioned to have a field of view that encompasses a route below the charging device. The one or more processors are configured to receive image data generated by the optical sensor. The image data depicts at least a portion of a roof of a vehicle that is on the route and a vehicle contact interface on the roof for conductively coupling to the charging device. The one or more processors are configured to analyze the image data that is received to inspect the roof of the vehicle and the vehicle contact interface, and in response to detecting an abnormal condition based on the image data, generate an alert message for notifying an operator about the abnormal condition.

In accordance with one example or aspect, a system is provided that includes an optical sensor associated with a charging device at a charging station and one or more processors communicatively connected to the optical sensor. The one or more processors are configured to receive image data generated by the optical sensor. The image data depicts at least a portion of a vehicle approaching the charging device. The one or more processors are configured to analyze the image data that is received to detect indicia displayed on the vehicle, and identify the vehicle based on the indicia that are detected. The one or more processors are configured to establish a communication link with the vehicle based on identifying the vehicle, and generate guidance instructions for communication to the vehicle via the communication link. The guidance instructions configured to assist with or control movement of the vehicle such that a vehicle contact interface mounted on the vehicle aligns with the charging device.

In accordance with one example or aspect, a method is provided that includes receiving image data generated by an optical sensor associated with a charging device at a charging station. The image data depicts at least a portion of a vehicle approaching the charging device. The method includes analyzing the image data that is received to detect the vehicle, and generating guidance instructions for communication to the vehicle. The guidance instructions configured to assist with or control movement of the vehicle such that a vehicle contact interface mounted on the vehicle aligns with the charging device.

In accordance with one example or aspect, a method is provided that includes receiving image data generated by an optical sensor associated with a charging device at a charging station. The image data depicting at least a portion of a vehicle approaching the charging device. The method includes analyzing the image data that is received to detect the vehicle, and generating a live video feed for communication to the vehicle. The live video feed depicts the image data generated by the optical sensor for display to an operator of the vehicle.

In accordance with one example or aspect, a method is provided that includes receiving image data generated by an optical sensor associated with a first charging device at a charging station. The first charging device corresponds to a first charging stall of multiple charging stalls at the charging station. The image data depicts at least a portion of a vehicle approaching the first charging device. The method includes analyzing the image data that is received to detect the vehicle, and determining a status of a second charging stall of the multiple charging stalls. The second charging stall is located next to the first charging stall. The method includes assigning the vehicle to the first charging stall based on the status of the second charging stall, and generating a control signal to notify the vehicle to stop at the first charging stall for conductively coupling to the first charging device.

In accordance with one example or aspect, a method is provided that includes receiving image data generated by an optical sensor associated with a charging device at a charging station. The image data depicts at least a portion of a roof of a vehicle that is on a route below the charging device. The portion of the roof includes a vehicle contact interface configured to conductively couple to the charging device. The method includes analyzing the image data that is received to inspect the roof of the vehicle and the vehicle contact interface, and detecting an abnormal condition based on the image data. The method includes generating an alert message for at least one of notifying an operator about the abnormal condition or scheduling maintenance to remedy the abnormal condition.

In accordance with one example or aspect, a method is provided that includes receiving image data generated by a camera associated with a pantograph at a charging station. The image data depicts at least a portion of a vehicle approaching the pantograph. The method includes analyzing the image data that is received to detect one or more physical aspects of the vehicle, and identifying the vehicle based on the one or more physical aspects that are detected. The method includes establishing a communication link with the vehicle based on identifying the vehicle, and communicating one or more of (i) a live video feed based on the image data generated by the camera or (ii) guidance instructions to the vehicle via the communication link. The guidance instructions are configured to assist with or control movement of the vehicle such that a vehicle contact interface mounted on the vehicle aligns with the pantograph.

### BRIEF DESCRIPTION OF THE DRAWINGS

The subject matter may be understood from reading the following description of non-limiting embodiments, with reference to the attached drawings, wherein below:
FIG. 1 is a block diagram of one example of a vehicle charge assist system;
FIG. 2 illustrates one example of the vehicle charge assist system shown in FIG. 1 at a charging station;
FIG. 3 illustrates one example of the vehicle charge assist system shown in FIG. 1, a pantograph, and a vehicle;
FIG. 4 represents one example of an image from a live video feed that is generated by the controller;
FIG. 5 illustrates one example of vehicles at a charging station that implements the vehicle charge assist system; and
FIG. 6 illustrates a flowchart of one example of a method of assisting a vehicle charge operation.

### DETAILED DESCRIPTION

Embodiments of the subject matter described herein relate to assisting with vehicle charge operations between a vehicle and an off-board power source. For example, the system and method described herein may assist with assignment of a vehicle to a charging device and alignment of the vehicle with the assigned charging device. Although various examples refer to a pantograph as a type of charging device, not all embodiments are limited to pantographs unless explicitly stated or disclaimed. For example, one or more examples of the subject matter describe herein may relate to assisting with operations between a vehicle and a wireless charging location, between a vehicle and an electrified rail, etc.

The system may automatically detect an approaching vehicle. The system may assign the vehicle to a charging spot that has an associated charging device. The system may then notify the vehicle about the assigned charging spot and/or direct the vehicle to the assigned charging spot. This notification and/or direction activity may be performed by communicating a message to the vehicle based on a detected identity of the vehicle, by operating one or more lights to provide instructional signals, and/or the like.

As the vehicle approaches the assigned charging spot, the system may assist with the alignment of the vehicle to the charging device (herein referred to as a pantograph) by providing visual cues and/or directional instructions to an operator of the vehicle. For example, the system may communicate a video feed showing image data captured (e.g., generated) by a camera mounted on or near the pantograph. The video feed may be a generally top-down view that depicts a portion of the pantograph and also shows the vehicle contact interface on the roof as the vehicle moves underneath the pantograph. The operator may visually compare the orientation of the vehicle contact interface to the pantograph to determine how to achieve proper alignment. Optionally, the system may superimpose a target overlay on the video feed to assist the operator with the manual alignment process. In another example, the system may automatically analyze the image data captured by the camera and generate guidance instructions for the vehicle to achieve an alignment position. The guidance instructions may be communicated to the vehicle and presented on a display device as directional commands, distance commands, and/or start-stop commands.

In an example, while the vehicle is in the alignment position, such that the vehicle contact interface is properly aligned with the pantograph, the system may monitor the charge transfer operation and/or inspect the components involved in the charge transfer. For example, the system may analyze additional image data captured by the camera to inspect the components of the vehicle contact interface, the pantograph, and/or other exterior parts of the vehicle including the roof. The inspection and monitoring may be used to beneficially provide early detection of damaged and/or worn components.

The vehicle assist charge system described herein may be implemented with various different types of electric vehicles. In some examples, the vehicles are transit vehicles. For example, the vehicle assist charge system may be implemented at a charging station or depot for buses. In another example, the transit vehicles may be light rail vehicles. However, not all examples are limited to transit vehicles. Unless expressly disclaimed or stated otherwise, the subject matter described herein extends to other types of vehicles, such as automobiles, trucks (with or without trailers), marine vessels, aircraft, mining vehicles, agricultural vehicles, or other off-highway vehicles.

If a system, apparatus, assembly, device, etc. (e.g., a controller, control device, control unit, etc.) includes multiple processors, these processors may be located in the same housing or enclosure (e.g., in the same device) or may be distributed among or between two or more housings or enclosures (e.g., in different devices). The multiple processors in the same or different devices may each perform the same functions described herein, or the multiple processors in the same or different devices may share performance of the functions described herein. For example, different processors may perform different sets or groups of the functions described herein.

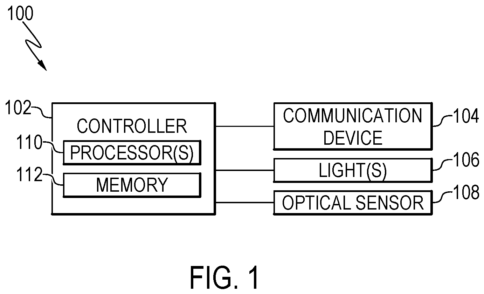

FIG. 1 is a block diagram of one example of a vehicle charge assist system 100. The vehicle charge assist system is also referred to herein simply as system. The system includes a controller 102, a communication device 104, one or more lights 106, and an optical sensor 108. The system optionally may include additional components that are not shown in FIG. 1, such as an audio speaker and/or one or more sensors. The system is associated with a charging station for supplying electrical energy to electric vehicles. The electric vehicles can be propelled using electrical energy stored in a storage device onboard the vehicles. The electric vehicles may be hybrid vehicles or fully electric vehicle. All, or at least some, of the components of the system may be disposed at the charging station. The controller may be operably connected to the communication device, the one or more lights, and the optical sensor via wired and/or wireless communication pathways.

The controller represents hardware circuitry that includes and/or is connected with one or more processors 110 (e.g., one or more microprocessors, integrated circuits, microcontrollers, field programmable gate arrays, etc.). The controller includes and/or is connected with a tangible and non-transitory computer-readable storage medium (e.g., memory) 112. The memory may store programmed instructions (e.g., software) that are executed by the one or more processors to perform the operations of the controller described herein. The programmed instructions may include image analysis and detection algorithms, guidance instruction generating algorithms, inspection algorithms, message generating algorithms, and/or the like. Optionally, the memory may include at least one neural network (e.g., deep learning) algorithm that is used by the processor(s) to perform one or more of the system tasks described herein. The memory may store additional information, such as image data generated by the optical sensor, a record of charging events, and/or the like.

The optical sensor captures (e.g., generates) image data of the surrounding environment within a field of view of the optical sensor. The optical sensor may be a visible wavelength camera, a LIDAR sensor, an active infrared camera, a passive thermal imaging camera, and/or the like. The optical sensor may be a video camera that generates image data at a designated or selected frame rate. The frame rate indicates the number of individual images generated per second. The optical sensor may capture image data in the visible wavelength range, the ultraviolet range, and/or the infrared range. Although various examples described herein refer to a "camera," the term camera used herein refers generally to an optical sensor which may be any of the optical sensors described herein and may have any of the characteristics of the optical sensor described herein.

In an example, the camera may capture image data in the visible wavelength range which is communicated by the system to a nearby vehicle as a live video feed. In an example, the controller may analyze at least some of the image data to perform one or more tasks. The one or more tasks performed based on the image data may include determining a status of one or more other charging spots in the charging station, detecting an approaching vehicle, identifying the approaching vehicle, determining guidance instructions to assist with aligning the approaching vehicle relative to a pantograph, inspecting a condition of the vehicle and/or the pantograph, and/or the like. The controller may receive the image device along a wire or cable that extends from the camera to the controller. The camera may be mounted on or next to a corresponding pantograph of the charging station.

The communication device represents hardware circuitry that can communicate electrical signals via wireless communication pathways and/or wired conductive pathways. The communication device may include transceiving circuitry (e.g., a transceiver or separate transmitter and receiver), one or more antennas, and the like, for wireless communication. For example, the controller may control the communication device to transmit or broadcast messages to vehicles at the charging station.

The one or more lights may be light emitting devices that are selectively controlled by the controller to alert and signal to observers. The one or more lights are referred to herein in the plural form, although in some examples the system may have only a single light. The lights may be light emitting diodes (LEDs), incandescent bulbs, or the like. The lights may be located at or near the pantograph that corresponds to the camera. The controller may control the lights by generating control signals that are conveyed to the lights via one or more wired conductive pathways and/or wireless pathways. In an example, the controller may activate the lights to provide a light signal to observers. A first light signal may indicate that the nearby vehicle should approach and stop at the corresponding charging spot associated with the pantograph. For example, the first light signal may have a green color, an illuminated word "open", or the like indicating availability of the pantograph for a charging operation. If the pantograph is not available for an approaching vehicle, the controller may control the lights to emit a second light signal indicating that the vehicle should not approach and should not stop at the corresponding charging spot. The second light signal could be a red light, an illuminated word "closed", an illuminated letter "X", or the like.

Optionally, the system may include additional components that are not shown in FIG. 1, such as an audio speaker, one or more sensors (e.g., laser range sensors, etc.), a digital display device, and/or the like. In a first alternative example, the system may omit the lights. For example, the system may use the communication device to communicate with approaching vehicles via messages, without providing illuminated signals. In a second alternative example, the system may omit the communication device. For example, the system may use the lights (and optionally other output devices such as a display screen and/or an audio speaker) to convey information to an approaching vehicle without communicating messages via RF signals to the vehicle.

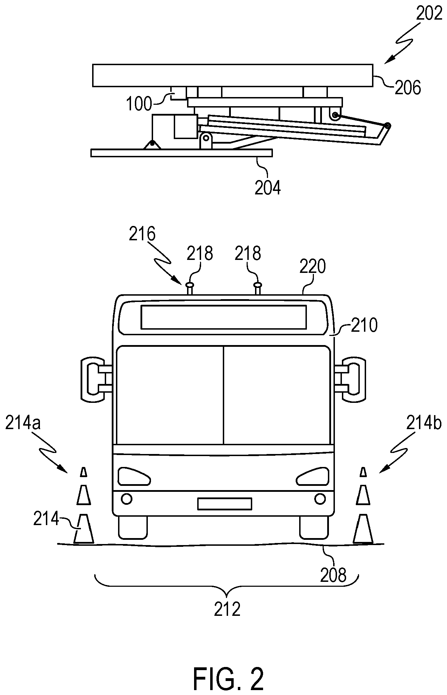

FIG. 2 illustrates one example of the vehicle charge assist system 100 shown in FIG. 1 at a charging station 202. The charging station includes a charging device 204 that is mounted to a base structure 206. In an example, the charging device is a pantograph. The base structure may extend over a surface 208, and the pantograph may be suspended above the surface. The base structure may be an awning, a ceiling, a pole, or the like. The components of the assist system may be mounted to the pantograph and/or the base structure. The surface is a surface on which one or more vehicles may be located and on which the vehicles may move. For example, the surface may be a parking lot, a route (e.g., road, track, etc.), or the like. Various examples described herein show and refer to a pantograph as the charging device, but the system and method disclosed herein are not limited to use with pantographs. For example, the offboard charging device may be a pantograph, a catenary line, an electrified rail, a wireless (e.g., indicative) charger, or the like. Reference herein to pantographs may be applicable to other types of charging devices in other example applications, unless specifically restricted to pantographs.

A vehicle 210 is disposed on the surface in FIG. 2. The vehicle may be a bus. The vehicle may be parked to commence a charging transfer operation with the charging station. For example, the vehicle may be located on a charging spot 212 or stall along the surface. The charging spot is associated with the pantograph because the pantograph can electrically connect only to vehicles located in that charging spot. The charging spot may be delineated by one or more markers 214 on the surface. The markers may be painted lines on the surface, cones, reflective tabs affixed to the surface, and/or the like. In FIG. 2, the vehicle reaches the charging spot by positioning itself between a first line of markers 214a and a second line of markers 214b. The first and second lines of markers indicate lateral bounds of the charging spot. Optionally, additional markers may be present on the surface to indicate longitudinal bounds of the charging spot.

The pantograph is shown in a retracted state. In the retracted state, the pantograph is folded to attain a compressed or shortened height, to avoid snagging on vehicles that move on the surface below the pantograph. The vehicle has a vehicle contact interface 216 that is designed to establish a conductive pathway with the pantograph. The vehicle contact interface may include one or more conductive elements 218. The conductive elements may be elongated. In an example, the conductive elements may be rails. The vehicle contact interface may include at least two parallel conductive elements. In FIG. 2, two conductive elements (e.g., rails) are mounted to the roof 220 of the vehicle. The conductive elements are oriented parallel to a longitudinal centerline or axis of the vehicle, such that only the front ends of the conductive elements are visible at the orientation depicted in FIG. 2. The conductive elements are spaced apart from the pantograph when the pantograph is retracted.

Although only one pantograph and one charging spot are shown in FIG. 2, the charging station may have a plurality of pantographs and charging spots. The multiple pantographs and charging spots may permit concurrent charge transfer operations to different vehicles.

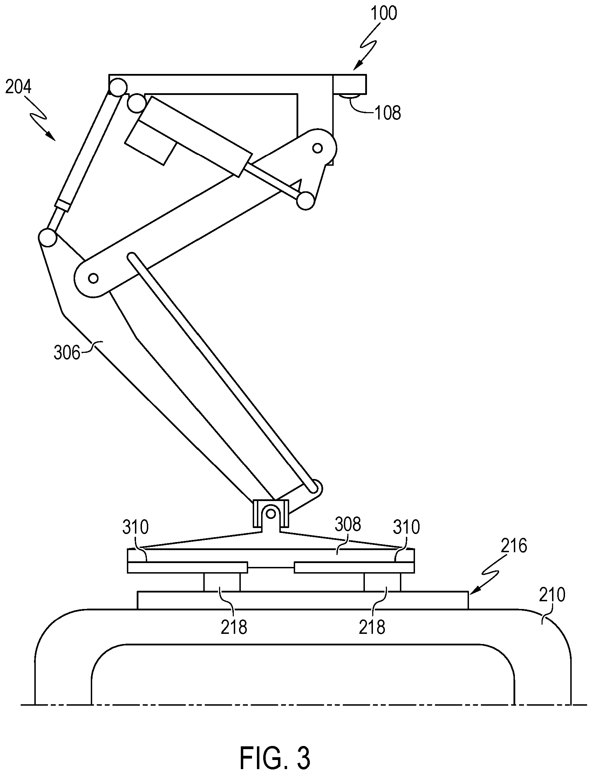

FIG. 3 illustrates one example of the vehicle charge assist system 100 shown in FIG. 1, the pantograph 204, and the vehicle 210. In FIG. 3, the pantograph is in an extended or deployed state. When extended, the pantograph has an elongated, taller height relative to the retracted state. The pantograph includes a frame 306 and a pantograph contact interface 308. The pantograph contact interface establishes an electrically conductive connection between the pantograph and the vehicle. The pantograph contact interface may include one or more contacts 310. The contacts may be in the form of electrically conductive strips. A suitable strip may be composed of carbon. When the pantograph is extended and a vehicle is in proper alignment on the charging spot, the conductive strips of the pantograph contact interface may physically contact the conductive elements 218 (e.g., rails) of the vehicle contact interface 216, establishing a conductive pathway between the vehicle and the charging station for a charge transfer operation. Optionally, the strips of the pantograph contact interface may remain slightly spaced apart from the rails of the vehicle, even in the extended state, to establish an inductive pathway between the vehicle and the charging station. To increase positional tolerances, the conductive strips of the pantograph contact interface may be oriented approximately perpendicular to an orientation of the conductive elements of the vehicle contact interface. For example, the conductive strips may be elongated and laterally oriented (e.g., oriented approximately perpendicular to a centerline or axis of the route). Alternatively, the conductive strips may be oriented parallel to the centerline of the route, and the conductive elements of the vehicle contact interface may be oriented perpendicular to the centerline of the route.

In FIG. 3, the camera 108 of the vehicle charge assist system is mounted to the frame of the pantograph and/or to the base structure that supports the pantograph. The camera may include, or may be coupled to, a housing 310. Optionally, the controller, the communication device, and/or the lights of the vehicle charge assist system may be incorporated on or within the housing. In an example, the vehicle charge assist system may be a modular device in which all of the components are integrated within the same housing or package. The modular device may be easily mounted on a charging station to assist with assignment of vehicles to charging spots and/or alignment of vehicles with pantographs. In an alternative example, at least some of the components of the system may be spaced apart from one another, such as in different respective housings.

The camera is positioned to capture image data of the surface and vehicles on the surface. In an example, the camera has a facedown orientation. A field of view of the camera may encompass a portion of the pantograph, a portion of a vehicle on the surface, and/or a portion of the surface (e.g., route). For example, the field of view may encompass the pantograph contact interface, which is used by the controller to determine the relative location of the vehicle to the pantograph contact interface. In an example, the field of view is sufficiently broad to include a segment of the surface (e.g., route) preceding the corresponding parking area (e.g., charging spot), which enables the controller to detect approaching vehicles. An image generated by the camera may depict both a portion of the pantograph and a portion of an approaching vehicle on the route. The controller may analyze the image to detect the vehicle and/or determine the relative positioning of the vehicle to the pantograph. The controller may also determine one or more characteristics about the pantograph based on analyzing the image data generated by the camera. For example, the controller may determine whether the pantograph is in an extended or retracted state by examining the image data that depicts at least a portion of the pantograph. The image data captured (e.g., generated) by the camera may be used in various ways to assist with directing the vehicle to an available pantograph, aligning the vehicle contact interface with the pantograph contact interface, and/or inspecting the vehicle and the pantograph during a charging operation. For example, the controller may generate guidance instructions for steering the vehicle relative to the pantograph based on analysis of the image data generated by the camera (e.g., image data depicting both a portion of the pantograph and a portion of the vehicle).

In an example, the controller uses the image data from the camera to generate a live video feed for communication to the vehicle that is approaching the pantograph. The live video feed may be displayed to an operator of the vehicle to allow the operator to steer the vehicle based on the position of the vehicle within the live video feed. The controller may generate the live video feed by aggregating the image data into a format that is able to be communicated to the vehicle. Optionally, the controller may modify the image data that is received from the camera by reformatting, adjusting characteristics, applying filters, and/or the like. In an example, the controller may crop the image data such that the live video feed depicts only a limited area of the field of view of the camera. The area depicted in the live video feed includes the space directly below the pantograph.

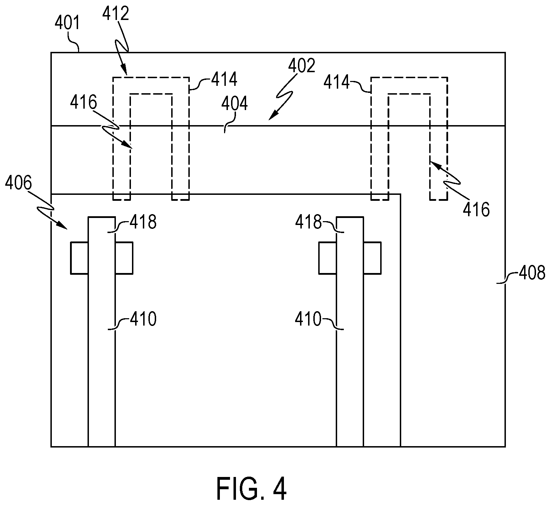

FIG. 4 represents one example of an image 401 from a live video feed that is generated by the controller. The image depicts the front end 402 of a vehicle 404 that is approaching a charging spot and pantograph associated with the vehicle charge assist system. The vehicle has a vehicle contact interface 406 on the roof 408. The vehicle contact interface may include two conductive rails 410. The portion of the vehicle shown in the image may be the portion of the vehicle that is directly below the camera at the time that the camera captures (e.g., generates) the image data used to form the image. In an example, the controller may superimpose a target overlay 412 on the image data depicted in the live video feed. The target overlay represents a graphic that is superficially added to the image data, rather than actually being present in the environment that is captured in the image data.

The target overlay may be specifically positioned relative to the image frame in order to assist with aligning the vehicle contact interface with the pantograph. In an example, the target overlay may include two brackets 414 (e.g., horseshoes) that are laterally spaced apart. Each bracket may define a slot 416 that would accommodate a front end segment 418 of one of the conductive rails. The operator of the vehicle may fine-tune the alignment of the vehicle contact interface relative to the pantograph by steering the vehicle such that the front end segments of the conductive rails visually appear to be disposed within the slots of the brackets. The operator may stop the vehicle once the front ends of the conductive rails are at the closed ends of the slots. With reference to FIG. 4, the operator viewing the image would determine that the vehicle should be steered to the right as the vehicle continues advancing towards the pantograph in order for the rails to align with the brackets.

Aligning the conductive rails with the target overlap ensures that the vehicle is in an alignment position with the pantograph. For example, when the conductive rails are within the slots of the brackets, the vehicle contact interface is positioned such that the conductive rails establish an electrical connection with the pantograph in the extended or deployed state. Optionally, the pantograph may not be shown in the live video feed. For example, the pantograph may be in the retracted state as the vehicle is moving. The position of the target overlay in the image frame may be correlated with the position of the pantograph contact interface in the extended state, such that the target overlay functions as a proxy or signifier of the alignment position. The target overlay may be presented in the live video feed as translucent to permit the operator to view portions of the image that overlap the overlay. The brackets shown in FIG. 4 represent one example shape of the target overlay. In another examples, the target overlay may be a rectangle, multiple parallel lines, and/or the like. For example, the target overlay may be first and second parallel lines, and the operator may align the vehicle with the pantograph by attempting to have the conductive rails collinearly align with the lines of the target overlay.

In another example, the controller may generate the live video feed to encompass at least a portion of the approaching vehicle and one or more markers along the surface. The markers may delineate the bounds of the charging spot (e.g., the markers 214 in FIG. 2). For example, the live video feed may show one or more outer edges of the vehicle, such as a front edge and a left edge of the vehicle roof. The live video feed may also depict one or more markers on the surface that define the front edge of the charging spot and the left edge of the charging spot. The markers along the surface may function as references to allow the operator to steer the vehicle to achieve the alignment position. For example, the operator may not be able to view such markers directly due to obstruction by the vehicle itself. In this example, the live video feed optionally may not include a target overlay.

In another example, the controller may generate the live video feed to encompass at least a portion of the vehicle contact interface of the approaching vehicle, as shown in FIG. 4, as well as at least a portion of the pantograph contact interface. For example, the operator of the vehicle may view both a first conductive rail of the vehicle and a first contact (e.g., conductive strip) of the pantograph in the live video feed that is displayed. Based on the positioning of these two components, the operator can steer the vehicle such that the first contact of the pantograph aligns with the first conductive rail to establish a conductive pathway once the pantograph is extended. In another example, the operator may compare the respective positions of front, back, left, and/or right edges of the two contact interfaces for steering guidance.

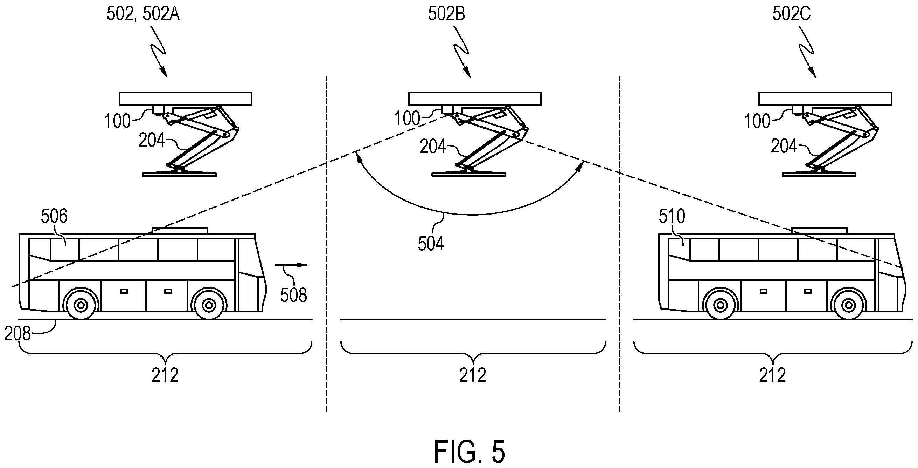

FIG. 5 illustrates one example of vehicles at a charging station that implements the vehicle charge assist system. The charging station includes multiple stalls 502. Each stall is designed to perform a charge transfer operation with one vehicle at a time. For example, each stall includes a respective pantograph 204, vehicle charge assist system 100, and charging spot 212 along the surface 208. FIG. 5 shows three stalls 502A, 502B, 502C arranged in a line such that a second stall 502B is between a first stall 502A and a third stall 502C in the line without any intervening stalls. The three stalls may be in the same row. For example, a single lane at the charging station may lead a vehicle through the first stall, followed by the second stall, and finally the third stall. Because of the relative spacing, the second stall and components thereof are referred to as "middle," the first stall and components thereof are referred to as "left," and the third stall and components thereof are referred to as "right." Although FIG. 5 shows three charging stalls, the charging station may have additional charging stalls that are not shown. For example, the row that includes the three visible stalls may include additional stalls to the left of the left stall and/or to the right of the right stall. In another example, the charging stalls at the charging station may be arranged in a grid or array that includes multiple rows.

In an example, the camera of the vehicle charge assist system may be positioned and oriented to depict the environment underneath the pantograph as well as a length of the surface (e.g., lane, route, etc.) on one or both sides of the pantograph. For example, the lens of the camera may be positioned to capture an approaching vehicle 506 that is moving towards the middle charging spot. In an example, the camera may have a relatively wide field of view 504. The field of view may be greater than 135 degrees. In an example, the field of view may be approximately 160 degrees. In an example, the camera may be oriented and/or configured (e.g., view wide angle setting) to capture a length of the route that is at least ten meters, at least 15 m, or the like along one or both sides of the respective charging spot. For example, the image data may capture both the left and right charging spots. As shown in FIG. 5, the approaching vehicle 506 is moving in an advancing direction 508 towards the middle charging spot, and a portion of the approaching vehicle is within the field of view.

The vehicle charge assist system in the middle charging stall may detect the approaching vehicle based on the image data generated by its respective camera. For example, the controller of the middle system may receive the image data from the camera and may analyze the image data to detect the approaching vehicle. The controller may use one or more image analysis techniques, such as shape recognition, pixel color analysis, and/or the like, to detect the presence of the approaching vehicle. Although not shown in FIG. 5, the controller optionally may be able to detect the approaching vehicle before the vehicle reaches the left charging spot.

In one or more examples, the vehicle charge assist system may assist with assigning the approaching vehicle to an appropriate and available charging stall. For example, it may not be clear to an operator of a vehicle which charging stalls are available and have the proper configuration for charging the particular vehicle. Regarding availability, some stalls may not be available because the stalls are currently occupied or out of service. As shown in FIG. 5, the image data generated by the camera may capture that a second vehicle 510 is present in the charging spot of the right charging stall. The right charging stall is the stall immediately beyond the middle stall in the advancing direction. Based on the second vehicle occupying the right charging spot, the controller at the middle charging stall may determine that the right charging stall is unavailable. The controller may determine that the middle charging stall is available because the pantograph is in service and the middle charging spot is unoccupied and unobstructed. Furthermore, the controller may assign the middle charging stall to the approaching vehicle because the middle charging stall is the farthest available stall in the row in the advancing direction. Thus, by assigning the vehicle to the middle stall, there would be no gap in which an available stall is unused while stalls on each side of the available stall are occupied. That situation would occur if the approaching vehicle stops and charges at the left charging stall, as the two illustrated vehicles would block access the middle charging stall resulting in delays and overall inefficient charging throughput.

In another example, even if the right charging spot is not occupied by a vehicle, the controller of the middle system may determine that the right charging stall is unavailable due to an obstruction, the pantograph being out of service, the right charging stall being reserved for a different vehicle, and/or the like. For example, the controller may analyze the image data captured by the camera of the middle stall to detect that there is an obstruction blocking access to the right charging stall. The obstruction may be a piece of the pantograph or base structure hanging down in the path that would contact a vehicle moving to the right charging spot. In another example, the obstruction may be a tree branch, a toolbox, or the like, that is located on the route. The controller of the middle stall may determine that the pantograph of the right charging stall is out of service based on image data and/or receiving a notification message from the vehicle charge assist system at the right charging stall. In a first example, the field of view of the camera at the middle stall may encompass a portion of the right stall that indicates that the pantograph is out of service. For example, the image data may depict a light signal that provides the status of the pantograph. The light signal may be a red light, an illuminated "X", a sign stating, "Out of Service", and/or the like. The controller at the middle stall may analyze the image data and interpret the light signal depicted in the image data as indicating that the right pantograph is out of service or otherwise not available, even if no vehicle is present on the right charging spot. In another example, the controllers at the different charging stalls may communicate with each other to provide status updates to one another. If the right pantograph is out of order and/or the right charging stall is otherwise unavailable, the controller of the right charging stall may communicate the unavailability status to the controller of the middle charging stall. The controller of the right vehicle charge assist system may communicate the notification message using the communication device 104 shown in FIG. 1, and the communication device of the middle vehicle charge assist system may receive the notification message and forward to the controller for processing.

Regarding configuration, some vehicles may have different types of vehicle contact interfaces and/or charging circuitry. A first vehicle may be able to receive electrical energy at a higher power level (e.g., greater voltage and/or greater current) than a second vehicle. Some charging stalls may have a first type of pantograph and/or deliver electrical energy at a first power level, while other charging stalls may have a second type of pantograph and/or deliver electrical energy at a second power level that is greater than the first power level. The controller may have or access information that describes the different characteristics and features of the different charging stalls, so the controller can allocate vehicles to different charging stalls based at least in part on the characteristics and features of the approaching vehicles.

In an example, the controller of the middle vehicle charge assist system may determine that the middle charging stall is the appropriate stall for the approaching vehicle. For example, the middle charging stall may be available, in service, unreserved for a period of time, and may have a configuration that is appropriate for charging the approaching vehicle. The controller may assign the approaching vehicle to the middle charging stall, and may communicate that assignment to the approaching vehicle via a visual cue, a wireless message (e.g., radio frequency (RF) message), and/or the like. The visual cue may involve controlling a light emitter, such as one or more of the lights 106 (shown in FIG. 1), to emit a first light signal. For example, the controller may control at least one of the lights at the middle stall to emit a first light signal to direct the approaching vehicle to stop at the middle charging spot. The lights that emit the first light signal may be on or near the pantograph. The first light signal could be a green light, an illuminated sign with text such as "Stop Here," or the like. Optionally, the controller may control light emitters at the left and/or right charging stalls to emit a second light signal to direct the approaching vehicle not to stop at the corresponding left and/or right charging spots. For example, if the right charging spot is unoccupied but the right charging stall is not assigned to the approaching vehicle, the controller may control the lights at the right charging stall to provide a red light, an illuminated "X," "Out of Service," or "Closed," sign, or the like.

The wireless message may be generated by the controller of the middle charging stall. The controller may control the communication device at the middle charging stall to communicate the notification message to the approaching vehicle. The notification message may be communicated prior to the approaching vehicle reaching the middle stall such that the operator of the approaching vehicle has sufficient time to interpret the content of the notification message and stop (e.g., park) the vehicle on the middle charging spot. The contents of the notification message instruct the vehicle to stop and charge at the middle charging stall. The contents optionally may identify the middle vehicle charge assist system as the source of the notification message. In an example, the notification message is an RF message that is broadcasted by the communication device and available for receipt by any vehicle within a limited proximity distance from the communication device. Limiting the range of the message may prohibit unintended recipients of the message.

Upon receiving the notification message, a vehicle control system of the approaching vehicle may display the contents of the notification message on a display device for viewing by the operator of the vehicle. The display device may present guidance instructions to the operator instructing the operator to slow and park the vehicle at the middle charging spot. Optionally, the vehicle control system may automatically control the movement of the vehicle to park the vehicle at the middle charging spot based on the contents of the notification message (without relying on operator intervention). An operator onboard the vehicle may have the ability to override this autonomous parking aspect if desired.

In another example, the communication device may transmit the notification message directly to the approaching vehicle. The controller may identify the approaching vehicle based on analysis of the image data generated by the camera. The identity may be determined based on detecting one or more physical aspects of the vehicle that in the aggregate allow the controller to uniquely identify the approaching vehicle. The middle vehicle charge assist system may communicate the notification message to the vehicle based on the identity of the vehicle. The physical aspects may include indicia displayed on the vehicle, a shape of the vehicle, a size of the vehicle, a color of the vehicle, components present along the exterior of the vehicle, irregularities (e.g., dents, discoloration, etc.), and/or the like. In an example, the indicia can include an alphanumeric code that is assigned to the vehicle and differentiates the vehicle from all other vehicles in the same geographic jurisdiction, vehicle network, business entity, and/or the like. The alphanumeric code may be a license plate, Federal Railroad Administration identifier (FRA ID), or the like.

After identifying the approaching vehicle, the controller may determine settings for communicating the notification message to the vehicle based on the identity of the vehicle. For example, the controller may access a look-up table that includes a list of vehicles by vehicle identity and associated instructions for communicating with each of the different vehicles in the list. The look-up table may be stored in the memory 112 (shown in FIG. 1). The instructions for communications may specify different frequency channels, communication protocols, and/or the like that are used by the corresponding vehicles. The controller at the middle charging stall may communicate the notification message to the approaching vehicle based on the instructions in the look-up table associated with that specific vehicle.

Optionally, the communication process may involve establishing a communication link between the vehicle charge assist system at the middle charging stall and the approaching vehicle. The communication link may specify settings and conditions for transfer of wireless messages between the two entities. The communication link may be established based on the determined identity of the approaching vehicle. To establish the communication link, the vehicle charge assist system may communicate a link request message, via the communication device, to the approaching vehicle. Upon receipt of the link request message, the vehicle control system onboard the vehicle may generate a link reply message that is communicated to the vehicle charge assist system. In general, communications between the vehicle charge assist system and the vehicle (e.g., the vehicle control system) may be facilitated via respective communication devices unless otherwise specified. The communication link may be established upon receipt of the link reply message at the vehicle charge assist system of the middle charging stall. The notification message and other messages between the vehicle charge assist device and the approaching vehicle may be communicated via the established communication link.

In an example, the controller of the vehicle charge assist system at the middle charging stall may analyze the image data that is received from the camera to determine and generate guidance instructions for communication to the approaching vehicle. The controller may generate the guidance instructions to assist with or control movement of the vehicle such that the vehicle contact interface mounted on the vehicle aligns with the pantograph at the middle charging stall while the vehicle is parked. The guidance instructions may include lateral steering directions and a distance to a stopping position for the vehicle. The controller may determine the lateral steering directions based on analysis of the image data to detect an offset between the vehicle and the pantograph (or a reference position correlated with the pantograph position while in the extended state). The lateral steering direction and distance information may be presented on a display device onboard the vehicle for observation by the operator of the vehicle. Optionally, the guidance instructions may include control signals for a vehicle control system onboard the vehicle to automatically control the movement of the vehicle.

In an example, the guidance instructions may be communicated to the approaching vehicle in one or more wireless RF messages. For example, the communication device of the vehicle charge assist system may broadcast or transmit an instruction message that contains the guidance instructions. In an example in which the instruction message is transmitted, the controller may determine the settings (e.g., frequency channel), protocol, and/or the like at which to transmit the instruction message based on using the image data to determine the identity of the approaching vehicle. In an example, the instruction message may be combined with the notification message. For example, the controller may generate a message that conveys information about which charging stall is assigned to the vehicle and how to move the vehicle to reach an alignment position at the assigned charging stall.

In an example, the controller of the vehicle charge assist system may control the camera to generate (e.g., capture) image data even after the vehicle reaches the alignment position and is properly aligned with the pantograph of a charging stall. For example, the camera may generate image data during a charging operation. The image data may depict the pantograph contact interface, the vehicle contact interface, and/or a portion of the roof of the vehicle surrounding the vehicle contact interface. The controller may analyze this image data during the charging operation to inspect the charge transfer components and the roof. For example, the controller may analyze the image data to detect whether there are any abnormal conditions present. An example abnormal condition that could be present in the image data is sparks emitted at the contact interfaces. The controller may also compare the image data to reference or historical data to detect differences indicative of an abnormal condition. For example, the controller may use this process to detect corrosion, foreign objects, and/or the like. The controller may generate an alert message in response to detecting an abnormal condition. The alert message may be communicated to the vehicle to notify the operator about the abnormal condition. The alert message may be communicated to maintenance personnel or a maintenance system for scheduling maintenance to remedy the abnormal condition. A record of the abnormal condition may be stored in a database, such as in the memory of the vehicle charge assist system. The inspection process may be performed by the controller using one or more deep learning artificial intelligence (AI) algorithms, such as neural networks.

In one or more examples, a vehicle charge assist system includes a camera mounted on or near a pantograph. A controller of the vehicle charge assist system analyzes the image data generated by the camera to recognize a vehicle and communicate direction and movement information to the driver of the vehicle. The controller detects the vehicle approaching the pantograph and communicatively links to the vehicle to establish communications between the system and the vehicle. The controller may communicate the direction and stopping point to the vehicle to assist with aligning the vehicle at the correct location within the tolerance limits of the pantograph.

In one or more examples, the camera field of view may capture other charging stalls. The controller may analyze the image data and determine which pantograph/charging stall is next in line to receive the next approaching vehicle. The controller may assign vehicles to charging stalls using this process to increase throughput and efficiency. The charging stalls may be communicatively connected to each other to convey status updates to one another. Using the information from other charging stalls, the controller may determine which charging stalls are occupied and otherwise unavailable (e.g., out of service, incompatible, etc.). The views from camera installations at other charging stalls may be used to check other charging stalls and related locations for vehicles parked but not charging and obstructions (such as equipment boxes or dumpsters) that block a clear approach to the charging stalls.

In one or more examples, the controller of the vehicle charge assist system may determine an identity (ID) of a vehicle and may establish a communication link based on the ID. The controller may determine the vehicle ID based on physical aspects, such as indicia (e.g., symbols) displayed on the vehicle. In an example, the controller may generate a live video feed using the image data depicted by the camera. The controller may communicate the live video feed to the vehicle using the communication link that is determined based on the ID. Optionally, the live video feed may be communicated by the controller along with instructional (e.g., guidance) information to guide the vehicle to the alignment position relative to the pantograph at the assigned charging stall. A display device or other equipment in the vehicle, after establishing the communication link, may display the video feed and/or the instructional information for viewing by an onboard operator that controls movement of the vehicle. The video feed and/or instructional information may be displayed on an integrated monitor in a vehicle cab or streamed out a communications port to a different display device. In an example, the communications may be sent over both a vehicle communications channel and a video channel. A message communicated on the video communications channel may inform the vehicle that a communication link has been established to allow the onboard communication device to switch to the appropriate channel for receiving the streaming video. Optionally, the instructional information may be communicated on the communications channel instead of the video channel.

In one or more examples, as the vehicle arrives at the assigned charging stall. The controller may observe the vehicle contact interface on the vehicle roof and visually inspect the vehicle contact interface and surrounding area of the roof for indications of maintenance issues that may need to be addressed, such as a buildup of corrosion or foreign objects which may foul the charging head. In an example, the controller may include or use one or more neural networks or other deep learning AI processors to analyze the image data for this inspection process.

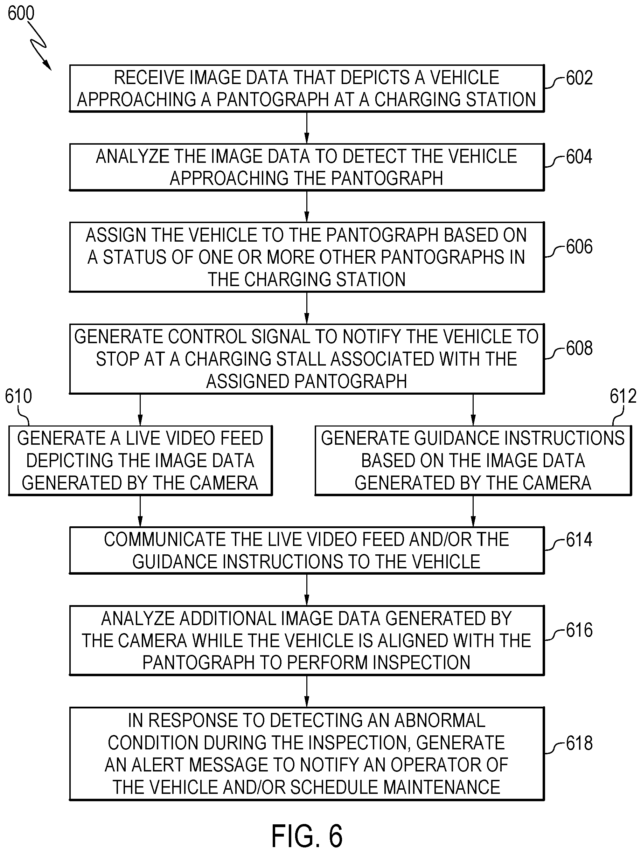

FIG. 6 illustrates a flowchart 600 of one example of a method of assisting a vehicle charge operation. The method may be performed in full, or in part, by the controller (e.g., one or more processors) of the vehicle charge assist system shown in FIG. 1. Optionally, the method in other examples may include addition steps not shown, may have a different arrangement of the steps shown in FIG. 6, and/or may omit one or more of the steps shown in FIG. 6.

At step 602, image data is received that depicts at least a portion of a vehicle approaching a pantograph at a charging station. The image data is generated by a camera associated with the pantograph. For example, the camera may be located at a charging stall that includes the pantograph and has a corresponding spot on which a vehicle stops to establish an electrical connection with the pantograph. The camera may be mounted on or near the pantograph. The camera may be mounted above a route (e.g., above the charging spot) that is traversed by vehicles, and may be oriented to capture image data depicting the top of vehicles below the camera.

In general, the camera may be mounted to have a field of view that includes both a full range of motion of at least a portion of the pantograph and a designated parking area of the vehicle. For example, a first image generated by the camera may depict the pantograph in a retracted state, and a second image generated by the camera may depict the pantograph in a deployed state. The controller may analyze the first and second images, as well as other images generated by the camera, to determine the state of the pantograph over time. Furthermore, the controller may be able to determine, based on the image data, that the pantograph is mispositioned relative to an expected position. For example, the controller may generate a control signal to an actuator to deploy the pantograph and then may analyze image data captured by the camera after generating the control signal to confirm whether or not the pantograph has reached the fully deployed state. The controller may generate an alert signal upon detecting that the pantograph is not fully deployed within a designated time period after generating the control signal.

At step 604, the image data that is received is analyzed to detect the vehicle approaching the pantograph. The image data may be analyzed to also determine the relative positioning of the vehicle to the pantograph. Furthermore, the image data may be analyzed to determine a state of the pantograph, a state of the vehicle (e.g., moving or stationary, speed of movement, etc.). The image data may also be analyzed to determine a status of another charging stall, to detect any obstructions on the route, and/or the like.

At step 606, the vehicle is assigned to the pantograph based on a status of one or more other pantographs and/or charging stalls in the charging station. At 608, a control signal is generated to notify the vehicle to stop at the relevant charging stall for electrically connecting to the assigned pantograph. The control signal may be generated to control a light emitter associated with the assigned pantograph to emit a first light signal to direct the vehicle to stop at the corresponding charging stall. In another example, the control signal may be generated to control a communication device to communicate a notification message to the vehicle. The notification message contains content that instructs the vehicle to stop at the charging stall associated with the assigned pantograph.

After assignment, the method may assist with aligning the vehicle to the assigned pantograph. For example, at step 610, a live video feed is generated. The live video feed depicts image data generated by the camera for display to an operator of the vehicle. In addition, or instead of step 610, guidance instructions are generated at step 612. The guidance instructions are configured to assist with or control movement of the vehicle such that a vehicle contact interface mounted on the vehicle aligns with the pantograph.

At step 614, the live video feed and/or the guidance instructions are communicated to the vehicle before the vehicle reaches the pantograph to assist with aligning the vehicle contact interface to the pantograph contact interface. At step 616, additional image data is analyzed to perform an inspection on the vehicle. The additional image data is generated by the camera while the vehicle contact interface is in alignment with the pantograph, such as during a charge transfer operation. In response to detecting an abnormal condition based on analyzing the additional image data, the method at 618 includes generating an alert message for (i) notifying an operator about the abnormal condition or (ii) scheduling maintenance to remedy the abnormal condition.

In an example, the vehicle charge assist system may include more than one camera corresponding to the same charging stall and positioned at different locations relative to the route. The camera 108 that is mounted above the route and the vehicle on the route may be a first camera of multiple different cameras. In an example, the system may include a second camera that is mounted above the route and above the vehicle on the route. The second camera may be laterally and/or longitudinally spaced apart from the first camera. Both cameras may generate respective image data of the route and any vehicle thereon, as well as the pantograph. The controller may analyze both image data feeds for enhanced image clarity and detection accuracy. For example, the use of two or more cameras may provide better spatial coverage and/or stereo vision. The stereo vision can be provided by analyzing image data generated by multiple cameras corresponding to overlapping subject matter in the surrounding environment from different perspectives. The controller may use the stereo vision to determine the distance of an approaching vehicle from the pantograph (e.g., charging spot). The controller may use the multiple sources of image data for generating guidance as the vehicle attempts to align with the pantograph.

In another example, the second camera may be mounted to the vehicle on the route. For example, the second camera may be mounted on the roof of the vehicle and positions to have a field of view directed upward away from the vehicle. As the vehicle approaches the charging stall, the image data generated by the second camera on the vehicle may capture the pantograph of the charging stall. Optionally, the image data generated by the second camera may also show a portion of the vehicle, such as a portion of the vehicle contact interface (e.g., rails). For example, the image data generated by the second camera may show a bottom-up view of the pantograph above the vehicle, while the first camera generates image data showing a top-down view of the vehicle below the pantograph. The controller may obtain multiple sets of image data generated by the different cameras during a common time period. For example, if the controller is located at the charging stall offboard the vehicle, the set of image data generated by the second camera onboard the vehicle may be transmitted to the offboard controller for analysis. In another example, the controller may be onboard the vehicle and may receive the image data generated by the second camera, which is onboard the vehicle, via a wired connection. The controller may receive the image data generated by the off-board, first camera via wireless communication. The controller may analyze the image data generated by the multiple cameras to assist a vehicle charge operation, as described above with respect to FIG. 1 through 6.

In another example, the charging device may be located along the surface on which the vehicles travel. For example, the charging device may be a pantograph-type device that is mounted to the surface and in the deployed state extends upward towards the underbody of a vehicle disposed on the surface. In the retracted state, the charging device may be located flush with the surface and/or recessed below the surface. The charging device may be an inductive (e.g., wireless) charger. In another example, the charging device may be an electrically conductive charger that has a charging device contact interface designed to physically contact the vehicle contact interface. The vehicle contact interface in this example may be along the underbody or underside of the vehicle, facing toward the surface. The optical sensor (e.g., camera) of the vehicle charge assist system may be mounted on the charging device and/or the surface and may have a field of view that is directed upward. The field of view may encompass an approaching vehicle, a vehicle directly above the charging device, and/or a vehicle in the next charging stall beyond the charging device. The field of view may encompass at least a portion of the charging device, such as a charging device contact interface. The controller may receive the image data generated by the optical sensor and perform the same operations as described above with reference to FIG. 1 through 6. For example, the controller may analyze the image data and generate control signals to assist with assigning the vehicle to a charging stall and guiding the vehicle into alignment with the charging device at the assigned charging stall.

In one example, the control system may have a local data collection system deployed that may use machine learning to enable derivation-based learning outcomes. The controller may learn from and make decisions on a set of data (including data provided by the various sensors), by making data-driven predictions and adapting according to the set of data. In examples, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In examples, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used for vehicle performance and behavior analytics, and the like.

In one example, the control system may include a policy engine that may apply one or more policies. These policies may be based at least in part on characteristics of a given item of equipment or environment. With respect to control policies, a neural network can receive input of a number of environmental and task-related parameters. These parameters may include an identification of a determined trip plan for a vehicle group, data from various sensors, and location and/or position data. The neural network can be trained to generate an output based on these inputs, with the output representing an action or sequence of actions that the vehicle group should take to accomplish the trip plan. During operation of one example, a determination can occur by processing the inputs through the parameters of the neural network to generate a value at the output node designating that action as the desired action. This action may translate into a signal that causes the vehicle to operate. This may be accomplished via back-propagation, feed forward processes, closed loop feedback, or open loop feedback. Alternatively, rather than using backpropagation, the machine learning system of the controller may use evolution strategies techniques to tune various parameters of the artificial neural network. The controller may use neural network architectures with functions that may not always be solvable using backpropagation, for example functions that are non-convex. In one example, the neural network has a set of parameters representing weights of its node connections. A number of copies of this network are generated and then different adjustments to the parameters are made, and simulations are done. Once the output from the various models are obtained, they may be evaluated on their performance using a determined success metric. The best model is selected, and the vehicle controller executes that plan to achieve the desired input data to mirror the predicted best outcome scenario. Additionally, the success metric may be a combination of the optimized outcomes, which may be weighed relative to each other.

The controller can use this artificial intelligence or machine learning to receive input (e.g., a location or change in location), use a model that associates locations with different operating modes to select an operating mode of the one or more functional devices of the HOV unit and/or EOV unit, and then provide an output (e.g., the operating mode selected using the model). The controller may receive additional input of the change in operating mode that was selected, such as analysis of noise or interference in communication signals (or a lack thereof), operator input, or the like, that indicates whether the machine-selected operating mode provided a desirable outcome or not. Based on this additional input, the controller can change the model, such as by changing which operating mode would be selected when a similar or identical location or change in location is received the next time or iteration. The controller can then use the changed or updated model again to select an operating mode, receive feedback on the selected operating mode, change or update the model again, etc., in additional iterations to repeatedly improve or change the model using artificial intelligence or machine learning.

As used herein, the "one or more processors" may individually or collectively, as a group, perform these operations. For example, the "one or more" processors can indicate that each processor performs each of these operations, or that each processor performs at least one, but not all, of these operations.

Use of phrases such as "one or more of ... and," "one or more of ... or," "at least one of ... and," and "at least one of ... or" are meant to encompass including only a single one of the items used in connection with the phrase, at least one of each one of the items used in connection with the phrase, or multiple ones of any or each of the items used in connection with the phrase. For example, "one or more of A, B, and C," "one or more of A, B, or C," "at least one of A, B, and C," and "at least one of A, B, or C" each can mean (1) at least one A, (2) at least one B, (3) at least one C, (4) at least one A and at least one B, (5) at least one A, at least one B, and at least one C, (6) at least one B and at least one C, or (7) at least one A and at least one C.

As used herein, an element or step recited in the singular and preceded with the word "a" or "an" do not exclude the plural of said elements or operations, unless such exclusion is explicitly stated. Furthermore, references to "one embodiment" of the invention do not exclude the existence of additional embodiments that incorporate the recited features. Moreover, unless explicitly stated to the contrary, embodiments "comprising," "comprises," "including," "includes," "having," or "has" an element or a plurality of elements having a particular property may include additional such elements not having that property. In the appended claims, the terms "including" and "in which" are used as the plain-English equivalents of the respective terms "comprising" and "wherein." Moreover, in the following claims, the terms "first," "second," and "third," etc. are used merely as labels, and do not impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function devoid of further structure.

This written description uses examples to disclose several embodiments of the subject matter, including the best mode, and to enable one of ordinary skill in the art to practice the embodiments of subject matter, including making and using any devices or systems and performing any incorporated methods. The patentable scope of the subject matter is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

## Claims

1. A system comprising:
one or more processors configured to be communicatively connected to an optical sensor, the one or more processors configured to:
receive image data generated by the optical sensor, the image data depicting at least a portion of a charging device and at least a portion of a vehicle approaching the charging device;
analyze the image data that is received to detect the vehicle; and
based on the image data that is analyzed, generate guidance instructions for communication to the vehicle, the guidance instructions configured to at least one of assist with or control movement of the vehicle such that a vehicle contact interface mounted on the vehicle aligns with the charging device.

2. The system of claim 1, wherein the one or more processors are configured to:
analyze the image data that is received to detect one or more physical aspects of the vehicle, wherein the one or more physical aspects of the vehicle comprise indicia displayed on the vehicle;
determine an identity of the vehicle based on the one or more physical aspects that are detected;
establish a communication link with the vehicle based on the identity of the vehicle; and
communicate the guidance instructions to the vehicle via the communication link.

3. The system of claim 1 or claim 2, wherein the one or more processors are configured to:
communicate a live video feed to the vehicle for display on a display device onboard the vehicle, the live video feed depicting the image data generated by the optical sensor, wherein the optical sensor associated with the charging device at a charging station.

4. The system of claim 3, wherein a field of view of the optical sensor encompasses:
a charging device contact interface of the charging device such that the live video feed depicts the charging device contact interface;
one or more markers on a surface on which the vehicle is located, and the live video feed depicts the one or more markers; or
that includes both a full range of motion of at least a portion of the charging device and a designated parking area of the vehicle.

5. The system of claim 3 or claim 4, wherein the one or more processors are configured to superimpose a target overlay on the image data depicted in the live video feed.

6. The system of any preceding claim, wherein the guidance instructions include:
lateral steering directions and a distance to a stopping position for the vehicle; or
control signals for a vehicle control system onboard the vehicle to automatically control the movement of the vehicle.

7. The system of any preceding claim, wherein the one or more processors configured to:
assign the vehicle to a first charging stall, wherein the charging device is associated with the first charging stall of multiple different charging stalls in a charging station; and
control a light emitter associated with the first charging stall to emit a first light signal to direct the vehicle to stop at the first charging stall, generate the guidance instructions to include a notification message indicating the first charging stall, or control a second light emitter associated with a second charging stall of the charging station to emit a second light signal to direct the vehicle not to stop at the second charging stall, or a combination thereof.

8. The system of any preceding claim, wherein the one or more processors configured to:
detect an abnormal condition based on the image data; and
generate an alert message for an operator about the abnormal condition or scheduling maintenance to remedy the abnormal condition

9. A method comprising:
receiving image data generated by an optical sensor associated with a charging device at a charging station, the image data depicting at least a portion of a vehicle approaching the charging device;
analyzing the image data that is received to detect the vehicle; and
generating guidance instructions for communication to the vehicle, the guidance instructions configured to assist with or control movement of the vehicle such that a vehicle contact interface mounted on the vehicle aligns with the charging device.

10. The method of claim 9, further comprising:
detecting an abnormal condition based on the image data; and
generating an alert message for at least one of notifying an operator about the abnormal condition or scheduling maintenance to remedy the abnormal condition

11. The method of claim 9 or claim 10, further comprising:
analyzing the image data that is received to detect one or more physical aspects of the vehicle;
identifying the vehicle based on the one or more physical aspects that are detected;
establishing a communication link with the vehicle based on identifying the vehicle; and
communicating one or more of (i) a live video feed based on the image data generated by a camera or (ii) the guidance instructions to the vehicle via the communication link, the guidance instructions configured to assist with or control movement of the vehicle such that a vehicle contact interface mounted on the vehicle aligns with a pantograph.

12. The method of claim 11, further comprising:
analyzing the image data that is received to detect one or more physical aspects of the vehicle;
determining an identity of the vehicle based on the one or more physical aspects that are detected; and
communicating the live video feed to the vehicle based on the identity of the vehicle.

13. The method of claim 11 or claim 12, further comprising:
superimposing a target overlay on the image data depicted in the live video feed.

14. The method of any of claims 9 to 13, further comprising:
determining the charging device corresponding to a first charging stall of multiple charging stalls at the charging station;
determining a status of a second charging stall of the multiple charging stalls, the second charging stall located next to the first charging stall;
assigning the vehicle to the first charging stall based on the status of the second charging stall; and
generating a control signal to notify the vehicle to stop at the first charging stall for conductively coupling to the charging device.

15. The method of claim 14, wherein the control signal is generated to:
control a light emitter associated with the first charging stall to emit a first light signal to direct the vehicle to stop at the first charging stall; or
control a communication device to communicate a notification message to the vehicle, the notification message containing content that instructs the vehicle to stop at the first charging stall.
